# EUROPEAN PATENT APPLICATION

(11) **EP 4 671 286 A1**
(43) Date of publication of application: **31.12.2025**
(21) Application number: 24760439.0
(22) Date of filing: 22.02.2024
(51) Int. Cl.: C08F 8/46, C08L 23/08

(54) **COMPOSITION FOR COMPATIBILIZER AND RECYCLABLE FILM CONTAINING SAME**

(30) Priority: 24.02.2023 JP 2023027201
(71) Applicant: Japan Polyethylene Corporation, Tokyo 100-8251 (JP)
(72) Inventor: MATSUMOTO, Jun, Kawasaki-shi, Kanagawa 210-8548 (JP)
(74) Representative: Müller-Boré & Partner Patentanwälte PartG mbB
(86) International application number: PCT/JP2024/006530
(87) International publication number: WO 2024/177141

(57) **Abstract**

The present invention provides a composition which is for a compatibilizer and which comprises: 20-95 mass% of a modified polyolefin that is obtained by graft-modifying, with a polar group-containing monomer, an ethylene-α-olefin copolymer having a density of 0.86-0.98 g/cm³ and a melt flow rate (MFR) of 10-110 g/10 min as measured at a temperature of 190°C and a load of 21.6 kg; and 80-5 mass% of a modified polyolefin that is obtained by graft-modifying, with a polar group-containing monomer, an ethylene-α-olefin copolymer having a density of 0.86-0.98 g/cm³ and an MFR of not less than 0.1 g/10 min and less than 10 g/10 min as measured at a temperature of 190°C and a load of 21.6 kg. The present invention also provides a resin composition using the composition. Thus, provided is a material which is suitable for a highly recyclable multilayer film and which does not have the problem of whitening even when mixed with a polyolefin.

## Description

### TECHNICAL FIELD

The present invention relates to a composition for a compatibilizer, and a recycled film containing the same.

### BACKGROUND ART

Resins such as polyethylene, polyester, and polyamide are easy to mold and each possess distinct characteristics, and hence are widely used in various everyday materials and industrial materials. Particularly, polyolefins, such as polyethylene and ethylene-α-olefin copolymers, are widely used as materials for resin molded products because the physical properties thereof can be precisely controlled by design through a combination of comonomers and by modification with compounds having functional groups (Patent Literatures 1 and 2).

Resins generally melt when heated, and can be easily molded into desired shapes. This property allows resins to be used in a thinly stretched film shape, for applications such as packaging materials. In addition, it is possible to combine characteristics unique to respective resins, such as gloss, rigidity, heat sealability, and easy tearability, allowing for the use as multilayer films formed by laminating various resins. Since respective layers in a multilayer film are made of different materials, an adhesive is added as needed to enhance uniformity between the plurality of types of resins.

Products utilizing resins have become so closely intertwined with daily life that it is difficult to eliminate the use, and with the recent rise in environmental awareness, resin molded products are now required to possess recyclability. Resins are mostly composed of carbon atoms, and also from the viewpoint of carbon neutrality, the industrial importance of recyclable resins is extremely high (Patent Literature 3). In particular, it is important to enable the utilization of packaging materials, which are produced and consumed in large quantities, as recycled films. Commercially available resin products require diverse physical properties, and hence frequently contain a plurality of components, and therefore, development of a recycling method from such molded products is now demanded (Patent Literature 4).

### PRIOR ART DOCUMENTS

### PATENT DOCUMENTS

Patent Literature 1: JP 1996-509772 A
Patent Literature 2: JP 2018-119101 A
Patent Literature 3: JP 2002-201292 A
Patent Literature 4: JP 2018-502743 A

### SUMMARY OF THE INVENTION

### PROBLEMS TO BE SOLVED BY THE INVENTION

The recycling of multilayer films is achieved by reusing products collected from the market and by reusing scrap pieces generated during the production process of molded products. Since at least two or more types of resins are used in a multilayer film, however, some mixed substances can harmfully affect recyclability. For example, an ethylene-vinyl alcohol copolymer (EVOH) having a gas barrier property, and nylon excellent in gloss, strength, and pinhole resistance are useful materials for multilayer films for packaging, but when a film contains EVOH or polyamide, whitening may be caused in reuse of the film. Especially in applications requiring transparency, multilayer films containing these resins are disadvantageous in recyclability. While recycling methods, such as techniques for separating resins from other components such as additives, have been developed, there is always a demand for resins with high recyclability. In consideration of this background, an object of the present invention is to provide a material that enhances the recyclability of a multilayer film, and is free from the problem of whitening even when scrap pieces of multilayer films containing polyamide and EVOH are mixed with polyolefin.

### MEANS TO SOLVE THE PROBLEMS

The present inventors have discovered that the aforementioned problem can be solved by design of a compatibilizer. Specifically, it has been found that a highly recyclable resin composition can be obtained by using, as a composition for a compatibilizer, resins obtained by respectively graft-modifying two types of ethylene-α-olefin copolymers with a polar group-containing monomer. A compatibilizer is an additive used to mix different types of materials. The present inventors have discovered that a recycled material not causing a problem of whitening even if a multilayer film is used as a recycled raw material, and excellent in physical properties can be provided through design of a compatibilizer, and thus have accomplished the present invention.

Specifically, the present invention relates to a composition for a compatibilizer and a resin composition specified in the following items:
[1] A composition for a compatibilizer comprising: 20 to 95% by mass of a modified polyolefin (1-g) obtained by graft-modifying, with a polar group-containing monomer, an ethylene-α-olefin copolymer (1) having a density of 0.86 to 0.98 g/cm³, and a melt flow rate (MFR) measured at a temperature of 190°C and a load of 2.16 kg of 10 to 110 g/10 min; and 80 to 5% by mass of a modified polyolefin (2-g) obtained by graft-modifying, with a polar group-containing monomer, an ethylene-α-olefin copolymer (2) having a density of 0.86 to 0.98 g/cm³, and an MFR measured at a temperature of 190°C and a load of 2.16 kg of 0.1 g/10 min or more and less than 10 g/10 min.
[2] The composition for a compatibilizer according to [1], having an MFR of 2 to 40 g/10 min.
[3] The composition for a compatibilizer according to [1] or [2], wherein the polar group-containing monomer is a carboxylic acid group- or acid anhydride group-containing monomer, an ester group-containing monomer, an amino group-containing monomer, a silane group-containing monomer, or a glycidyl group-containing monomer.
[4] The composition for a compatibilizer according to any one of [1] to [3], wherein the polar group-containing monomer is a carboxylic acid group- or acid anhydride group-containing monomer.
[5] A resin composition obtained by kneading: the composition for a compatibilizer according to any one of [1] to [4] (A) in an amount of 0.1 to 50% by mass; polyolefin (B) in an amount of 94.9 to 20% by mass; and a polymer (C) corresponding to none of the modified polyolefin (1-g), the modified polyolefin (2-g), and the (B) in an amount of 5.0 to 79% by mass.
[6] The resin composition according to [5], wherein the (C) is one or more selected from the group consisting of polyamide, polyester, and an ethylene-vinyl alcohol copolymer (EVOH).
[7] A resin composition obtained by kneading: the composition for a compatibilizer according to any one of [1] to [4] (A) in an amount of 30 to 0.1% by mass; molded product scrap pieces (D) comprising 50 to 95% by mass of polyolefin, and 50 to 5% by mass of one or more selected from the group consisting of polyamide, polyester, and EVOH, in an amount of 70 to 99.9% by mass; and optionally polyolefin (B') not derived from molded product scrap pieces in an amount of 0 parts by mass to 95 parts by mass based on 100 parts by mass of a total amount of the composition for a compatibilizer and the molded product scrap pieces.
[8] A recycled film obtained by molding using the resin composition according to [7].
[9] A multilayer film comprising at least: a layer (I) comprising the resin composition according to [7]; and a layer (II) comprising one or more polymers selected from the group consisting of polyamide, polyester, and an ethylene-vinyl alcohol copolymer (EVOH).
[10] A method for producing a recycled film, comprising a step of melt-kneading: the composition for a compatibilizer according to any one of [1] to [4] (A) in an amount of 0.1 to 30% by mass; polyolefin (B) in an amount of 94.9 to 20% by mass; and a polymer (C) corresponding to none of the modified polyolefin (1-g), the modified polyolefin (2-g), and the (B), in an amount of 5.0 to 79% by mass.

### EFFECTS OF THE INVENTION

The present invention provides a composition for a compatibilizer and a resin composition not causing a problem of whitening even if a multilayer film is used as a recycled raw material.

### EMBODIMENTS TO CARRY OUT THE INVENTION

Now, a resin of the present invention will be described in detail with respect to each of items. Herein, the term "(meth)acrylic acid" means acrylic acid or methacrylic acid. Besides, "to" used herein for indicating a numerical range is used to mean that preceding and following numerical values are included as the lower and upper limits. Herein, a copolymer means a binary or higher-order copolymer containing at least one unit (A) and at least one unit (B).

### (1) Ethylene-α-olefin Copolymer

A composition for a compatibilizer of the present invention contains: a modified polyolefin (1-g), which is obtained by graft-modifying an ethylene-α-olefin copolymer used as a principal component (hereinafter sometimes referred to as "copolymer (1)") with a polar group-containing monomer; and a modified polyolefin (2-g), which is obtained by graft-modifying another type of ethylene-α-olefin copolymer (hereinafter sometimes referred to as "copolymer (2)") with a polar group-containing monomer, and can be obtained by kneading these together. As the copolymer (1) and the copolymer (2), those satisfying the following conditions can be selected, or designed to obtain by a polymerization reaction.

An ethylene-α-olefin copolymer is a copolymer having a structural unit derived from ethylene, and a structural unit derived from an α-olefin, and is generally obtained by copolymerization of ethylene and an α-olefin. The ethylene-α-olefin copolymer contains no polar group. As the ethylene, non-petroleum-derived ethylene, such as that derived from a plant-based raw material, can be used in addition to those derived from petroleum. The α-olefin is an α-olefin represented by a structural formula: CH₂=CHR¹, and having 3 to 20 carbon atoms, wherein R¹ represents a hydrocarbon group having 1 to 18 carbon atoms, and can have a linear structure or a branch. The number of carbon atoms of the α-olefin is more preferably 3 to 12.

Specific examples of the α-olefin include propylene, 1-butene, 1-pentene, 1-hexene, 1-octene, 1-decene, 3-methyl-1-butene, and 4-methyl-1-pentene.

Examples of the ethylene-α-olefin include ethylene-propylene, ethylene-1-butene, ethylene-1-hexene, ethylene-1-octene, propylene-1-butene, propylene-1-hexene, and propylene-1-octene. Besides, two or more α-olefins may be used in combination. Examples of the combination in this case include ethylene-propylene-1-butene, ethylene-propylene-1-hexene, ethylene-propylene-1-octene, propylene-1-butene-hexene, and propylene-1-butene-1-octene. For the copolymer (1) and the copolymer (2), these ethylenes or α-olefins can be used without any particular limitations.

While the composition ratio in the ethylene-α-olefin copolymer is not particularly limited, the amount of ethylene may be 50 to 100 mol%, 70 to 100 mol%, or 90 to 100 mol% relative to the total moles of the copolymer. Besides, ethylene and α-olefin may be in the form of a random copolymer, where these are randomly polymerized, or a block copolymer, where polymerized portions of the respective monomers are linked together.

The ethylene-α-olefin copolymer may have a structure with a branch in the polymer chain, or may have a linear structure with a few or no branches. Here, a "linear" structure refers to a structure having a straight-chain molecular structure, and containing either no long-chain branches at all, or only a small number of long-chain branches to an extent that the mechanical strength is not affected. It can be determined whether or not a polymer molecule is linear, for example, by whether or not a phase angle δ at an absolute value of complex modulus G* = 0.1 MPa, measured with a rotational rheometer, is 40 degrees or more. The phase angle δ can be measured specifically by a method described in JP 2019-099798 A. Besides, a commercially available product such as Novatec (R) series manufactured by Japan Polyethylene Corporation can be used as such a copolymer.

The copolymer (1) has a density in the range of 0.860 to 0.980 g/cm³. The density is preferably in the range of 0.865 to 0.960 g/cm³, and more preferably in the range of 0.870 to 0.950 g/cm³. When the density is less than 0.860 g/cm³, rigidity, chemical resistance, and fuel oil resistance may be reduced, and when is more than 0.980 g/cm³, mechanical properties such as impact resistance and creep resistance may be insufficient.

The copolymer (1) has a melt flow rate (MFR) at a measurement temperature of 190°C and a load of 2.16 kg of 10 g/10 min or more and 110 g/10 min or less. The MFR is preferably 15 g/10 min or more, and more preferably 20 g/10 min or more, and preferably 80 g/10 min or less, and more preferably 60 g/10 min or less. When the MFR is more than 110 g/10 min, the copolymer may be difficult to process into pellets due to its low viscosity, and mechanical properties such as impact resistance and creep resistance may be insufficient.

The molecular weight of the copolymer (1) is not especially limited, and the weight average molecular weight (Mw) thereof is preferably 500 to 1,000,000, more preferably 1,000 to 500,000, and further preferably 10,000 to 300,000. When the molecular weight is within this range, the copolymer exhibits sufficient compatibility, and is less likely to decrease in physical properties.

A ratio between the weight average molecular weight (Mw) and a number average molecular weight (Mn) of the copolymer (1) (Mw/Mn) is preferably in the range of 1.5 to 4.0, more preferably in the range of 1.6 to 3.3, and further preferably in the range of 1.7 to 3.0. When the Mw/Mn is less than 1.5, various processing properties, including moldability, may be insufficient in some cases, and when is more than 4.0, the mechanical properties may be inferior in some cases. Herein, the (Mw/Mn) is sometimes referred to as the molecular weight distribution parameter. The weight average molecular weight (Mw) is obtained by gel permeation chromatography (GPC). For the molecular weight distribution parameter (Mw/Mn), the number average molecular weight (Mn) is further obtained by gel permeation chromatography to calculate the ratio between the Mw and the Mn, namely, Mw/Mn. The GPC measurement may be performed by employing a commercially available apparatus, and measurement conditions. As a specific method, a method described in JP 2020-117712 A may be employed.

The composition for a compatibilizer of the present invention contains an ethylene-α-olefin copolymer different from the copolymer (1) (hereinafter, also referred to as the "copolymer (2)"). The raw materials, a production method, and ranges of various parameters such as density employed for the copolymer (2) are the same as those for the copolymer (1), with the exception of the MFR range described below.

The copolymer (2) has a melt flow rate (MFR) at a measurement temperature of 190°C and a load of 2.16 kg of 0.1 g/10 min or more and less than 10 g/10 min. The MFR is preferably 0.5 g/10 min or more, and more preferably 1.0 g/10 min or more, and preferably 8 g/10 min or less, and more preferably 6 g/10 min or less. When the MFR is less than 0.1 g/10 min, fluidity may be insufficient during molding, and thus molding stability may be impaired.

The amount of the copolymer (1) in the composition for a compatibilizer is in the range of 20 to 95% by mass assuming that the total amount of the copolymer (1) and the copolymer (2) is 100% by mass. The amount is preferably in the range of 50 to 90% by mass, and more preferably 60 to 85% by mass. By adding the copolymer (2) to the copolymer (1), processability can be imparted while a function as a compatibilizer is exhibited. The amount of the copolymer (2) is in the range of 5 to 80% by mass assuming that the total amount of the copolymer (1) and the copolymer (2) is 100% by mass. The amount is preferably in the range of 10 to 45% by mass, and more preferably in the range of 15 to 40% by mass.

A method for producing the ethylene-α-olefin copolymer is not especially limited, and examples of the method include a high-pressure radical polymerization method, a high-, medium-, or low-pressure method using a Ziegler, Phillips, or singlesite catalyst, a high-, medium-, or low-pressure method using a metallocene catalyst, and other known methods. As another production method, for example, any of various production methods described in JP 2015-180714 A, and literatures cited therein can be employed for the production.

The copolymer (1) and the copolymer (2) may be graft-modified with a polar group-containing monomer as a mixture. The mixing method is not particularly limited as long as it can achieve a homogeneous mixture, and can be carried out by any method known to those skilled in the art. Specifically, a single-screw extruder, a twin-screw extruder, a kneader, a Banbury mixer, a Brabender mixer, a reciprocating kneader (BUSS Kneaders) and the like are commonly used, and among these, a single-screw extruder and a twin-screw extruder are more favorably used from the viewpoint of productivity.

### (2) Polar Group-containing Monomer

The composition for a compatibilizer of the present invention is a composition containing the modified polyolefins respectively obtained by graft-modifying the copolymer (1) and the copolymer (2) with a polar group-containing monomer. Hereinafter, the modified polyolefin obtained by graft-modifying the copolymer (1) may be referred to as the modified polyolefin (1-g), and the modified polyolefin obtained by graft-modifying the copolymer (2) may be referred to as the modified polyolefin (2-g). As a method for graft-modifying a polyolefin resin with a polar group-containing monomer, any of methods known to those skilled in the art, such as one disclosed in JP 1975-4144 A, can be appropriately employed. By using the composition for a compatibilizer containing the graft-modified polyolefins, it is possible to obtain a resin composition that yields a film excellent in optical properties, a gloss or haze value, and transparency, while high recyclability is also achieved.

Any known polar groups can be applied without limitation as the polar group contained in the graft-modified polyolefins (1-g) and (2-g), and preferable examples include a carboxyl group, a dicarboxylic acid anhydride group, an amino group, an ester group, a silanol group, and a glycidyl group, and more preferable examples include a carboxyl group, and a dicarboxylic acid anhydride group.

The method of the graft modification is not limited, and for example, a melting method in which a polar group-containing monomer is reacted with a polyethylene resin in a molten state in an extruder or the like using a reaction initiator, and a solution method in which a polyethylene resin is dissolved in a solvent to be reacted with a polar group-containing monomer using a reaction initiator, and the like are known. Any of these may be favorably employed, and the melting method is more favorably selected from the viewpoint of production cost and environmental load.

### (2-1) Melting Method

An example of the melting method, that is, one of the graft modification methods, will now be described.

A melt-kneading apparatus used for the graft modification is not limited, and any apparatus usable for kneading the copolymer (1) and the copolymer (2) can be used.

### (2-2) Reaction Initiator

An example of a reaction initiator to be used for the graft modification includes a radical initiator that decomposes upon heating or other means to generate a radical. Examples of the radical initiator include an organic peroxide, a dihydroaromatic compound, and a dicumyl compound. As the organic peroxide, for example, hydroperoxide, dicumyl peroxide, t-butylcumyl peroxide, dialkyl(allyl) peroxide, diisopropylbenzene hydroperoxide, dipropionyl peroxide, dioctanoyl peroxide, benzoyl peroxide, peroxysuccinic acid, peroxyketal, 2,5-dimethyl-2,5-di(t-butylperoxy)hexyne, 2,5-dimethyl-2,5-di(t-butylperoxy)hexane, t-butoxyacetate, and t-butyl peroxyisobutyrate are favorably used.

Examples of the dihydroaromatic compound include dihydroquinoline or a derivative thereof, dihydrofuran, 1,2-dihydrobenzene, 1,2-dihydronaphthalene, and 9,10-dihydrophenanthrene.

Examples of the dicumyl compound include 2,3-dimethyl-2,3-diphenylbutane, 2,3-diethyl-2,3-diphenylbutane, 2,3-diethyl-2,3-di(p-methylphenyl)butane, and 2,3-diethyl-2,3-di(p-bromophenyl)butane, among which 2,3-diethyl-2,3-diphenylbutane is particularly preferably used.

### (2-3) Polar Group-containing Monomer

Examples of the polar group-containing monomer to be used in the graft modification include a carboxylic acid group- or acid anhydride group-containing monomer (a), an ester group-containing monomer (b), an amino group-containing monomer (c), a silane group-containing monomer (d), and a glycidyl group-containing monomer (e), among which a carboxylic acid group- or acid anhydride group-containing monomer (a) is more preferred, and an acid anhydride group-containing monomer is particularly favorably used. One of these polar group-containing monomers may be singly used, or two or more of these may be used together.

Examples of the carboxylic acid group- or acid anhydride group-containing monomer (a) include unsaturated dicarboxylic acids such as maleic acid, fumaric acid, citraconic acid, itaconic acid, 2,7-octadien-1-ylsuccinic acid, and 5-norbornene-2,3-dicarboxylic acid, or anhydrides thereof; unsaturated monocarboxylic acids such as acrylic acid, methacrylic acid, furan acid, crotonic acid, vinyl acetate, and pentenoic acid, among which maleic anhydride, 2,7-octadien-1-ylsuccinic anhydride, and 5-norbomene-2,3-dicarboxylic anhydride are more preferred, and maleic anhydride is particularly preferred. Maleic anhydride is preferred because it has a vinyl group, and hence is easily introduced into polyolefin, is capable of copolymerization and graft modification and is highly reactive, and can be used as an adhesive or a compatibilizer by chemically reacting with a different material.

Examples of the ester group-containing monomer (b) include methyl acrylate, methyl methacrylate, ethyl acrylate, ethyl methacrylate, butyl acrylate, and butyl methacrylate, among which methyl acrylate is particularly preferred.

Examples of the amino group-containing monomer (c) include aminoethyl (meth)acrylate, dimethylaminoethyl (meth)acrylate, diethylaminoethyl (meth)acrylate, and cyclohexylaminoethyl (meth)acrylate.

Examples of the silane group-containing monomer (d) include unsaturated silane compounds such as vinyltrimethoxysilane, vinyltriethoxysilane, vinyltriacetylsilane, and vinyltrichlorosilane.

Examples of the glycidyl group-containing monomer (e) include 1,2-epoxy-9-decene, 4-hydroxybutyl acrylate glycidyl ether, glycidyl methacrylate, and 1,2-epoxy-4-vinylcyclohexane.

### (2-4) Treatment Temperature in Graft Modification

A treatment temperature employed in the graft modification is appropriately selected, considering degradation of the polyethylene resin, decomposition of the polar group-containing monomer, and the decomposition temperature of the peroxide used, and for example, in employing the melt-kneading method described above, the temperature is usually 190 to 350°C, and particularly favorably 200 to 300°C.

When the polyolefin resin is graft-modified with the polar group-containing monomer by the melt-kneading method exemplified above, a high monomer addition rate can be achieved by setting the resin temperature during the melt-kneading to 250°C or more. When the resin temperature is more than 310°C, the polyethylene itself degrades more rapidly, leading to a significant increase in gels and resin burn, which lowers the quality.

Besides, since the reaction is performed at such a high temperature, it is necessary to minimize air entrainment inside an extruder or a reactor, and additionally, during the melt-kneading, prolonged resin retention within the extruder or the like should be avoided. Therefore, it is extremely preferable to feed nitrogen near a raw material resin feeding port.

In production of the composition for a compatibilizer of the present invention by the graft modification, it is not preferable to add commonly used additives such as an antioxidant. For example, adding an antioxidant for polyolefin, such as a phenol, can lead to antagonism between the antioxidant and the reaction initiator, and thus, the amount of an unreacted portion of the polar group-containing monomer may be increased.

### (3) Composition for Compatibilizer

The composition for a compatibilizer of the present invention contains the modified polyolefin (1-g) obtained by graft-modifying the copolymer (1) with the polar group-containing monomer, and the modified polyolefin (2-g) obtained by graft-modifying the copolymer (2) with the polar group-containing monomer. The physical properties of the composition for a compatibilizer and the amount, in the composition for a compatibilizer, of the polar group to be introduced are not particularly limited as long as these are obtained as a result of the graft modification of the aforementioned components. For example, when the polar group is an acid anhydride group, a C=O value, which is calculated by a method described below, as the amount of the acid anhydride group contained in the composition for a compatibilizer, is generally in the range of 0.001 to 10.0, more preferably, in the range of 0.01 to 5.0, and further preferably in the range of 0.02 to 3.0. When the amount of the acid anhydride group introduced to be contained in the composition for a compatibilizer is smaller than 0.001, the compatibility with different materials may be insufficient, and when the amount is more than 10.0, the compatibility with the polyethylene resin and the mechanical properties of the resin composition may decrease. The C=O value is calculated based on measurement with a Fourier transform infrared spectrophotometer (FT-IR). For specific calculation, absorbances at 4250 cm⁻¹, 1790 cm⁻¹, and 1710 cm⁻¹ are first obtained through FT-IR measurement. The absorption at 4250 cm⁻¹ corresponds to a methylene chain (-CH₂-), and the absorptions at 1790 cm⁻¹ and 1710 cm⁻¹ correspond to a carbonyl group within the acid anhydride group. Assuming the absorbance at 4250 cm⁻¹ as I₀, the absorbance at 1790 cm⁻¹ as I₁, and the absorbance at 1710 cm⁻¹ as I₂, a value of (I₁ + I₂)/I₀ is defined as the C=O value.

From the viewpoint of moldability achieved when blended into a resin composition, the composition for a compatibilizer has an MFR, measured at a temperature of 190°C and a load of 2.16 kg, of preferably 2 to 40 g/10 min, and more preferably 5 to 20 g/10 min. When the MFR is less than 2 g/10 min, the fluidity of the resin composition is reduced, which may make molding difficult, and when is more than 30 g/10 min, the resultant low viscosity makes processing into pellets difficult, and the impact resistance or durability of the resin composition may decrease.

### (4) Resin Composition

One aspect of the present invention relates to a resin composition obtained by kneading the aforementioned composition for a compatibilizer (A) in an amount of 0.1 to 50% by mass, polyolefin (B) in an amount of 94.9 to 20% by mass, and one or more polymers (C) selected from the group consisting of polymers corresponding to none of the modified polyolefin (1-g), the modified polyolefin (2-g), and the (B), in an amount of 5 to 79% by mass. The resin composition may contain a polar group-containing polyolefin other than the composition for a compatibilizer of the present invention. The amount of the composition for a compatibilizer (A) in the resin composition is more preferably 1 to 40% by mass, and further preferably 2 to 35% by mass relative to 100% by mass of the total amount of the (A) to the (C).

Examples of the polyolefin (B) that can be mixed and used in the composition for a compatibilizer include a polymer of ethylene or α-olefin, a copolymer of ethylene and α-olefin, a copolymer of ethylene and olefin, such as norbornene, a polymer of a polar group-containing ethylene or α-olefin, a copolymer of ethylene and α-olefin, and a copolymer of ethylene and olefin, such as norbornene. Any of these may be appropriately selected in accordance with molding application, and one of these or two or more of these may be used. A preferable example includes polyethylene, polypropylene, and a copolymer of ethylene-α-olefin.

The amount of the polyolefin (B) in the resin composition can be appropriately set within the range of 94.9 to 20% by mass relative to 100% by mass of the total amount of the (A) to the (C), depending on the molding application and target. A preferable range is 85 to 40% by mass, and a more preferable range is 80 to 40% by mass.

The polymer (C) that can be mixed and used in the composition for a compatibilizer, and corresponds to none of the modified polyolefin (1-g), the modified polyolefin (2-g), and the (B), is not particularly limited as long as it is a polymer used as a raw material of a resin film, and a polymer having a functional group in a main chain or side chain thereof can be used. Examples of the functional group include those having a heteroatom selected from the group consisting of oxygen, nitrogen, and sulfur, and when it is contained in a side chain, examples include an aromatic ring and a halogen atom. Specific examples of the (C) include polyamide, polyester, an ethylene-vinyl alcohol copolymer (EVOH), polystyrene, polyurethane, an acrylic resin, and polyphenylene ether. In particular, polyamide, polyester, and an ethylene-vinyl alcohol copolymer (EVOH) are preferred. Examples of the polyamide that can be mixed and used in the composition for a compatibilizer include polycapramide (nylon 6), polyhexamethylene adipamide (nylon 6,6), polyhexamethylene sebacamide (nylon 6,10), polyundecanamide (nylon 11), poly-ω-aminoheptanoic acid (nylon 7), and poly-ω-aminononanoic acid (nylon 9).

Examples of the polyester that can be mixed and used in the composition for a compatibilizer include an aromatic ring-containing polyester and an aliphatic polyester. Here, examples of the aromatic ring-containing polyester include polyalkylene (C2 to 24) terephthalates such as polyethylene terephthalate (PET) and polybutylene terephthalate (PBT); polyalkylene (C2 to 24) isophthalates such as polyethylene isophthalate and polybutylene isophthalate; and poly-p-phenylene esters such as poly-p-phenylene malonate, poly-p-phenylene adipate, and poly-p-phenylene terephthalate, and examples of the aliphatic polyester include polybutylene adipate, polyethylene adipate, poly-ε-caprolactone, and polylactic acid.

The ethylene-vinyl alcohol copolymer (EVOH) that can be mixed and used in the composition for a compatibilizer is not particularly limited in its molecular weight, ethylene content, density, and other physical properties, and any suitable one can be used.

These polyamides, polyesters, and EVOHs are known and commonly used, and can be purchased for use as commercially available products as needed.

The total amount of the polyamide, polyester, and EVOH can be appropriately set within the range of 5 to 79% by mass relative to 100% by mass of the total amount of the (A) to the (C), depending on the molding application and target. The range is preferably 5 to 75% by mass, and more preferably 5 to 70% by mass. When the resin composition contains two or more of the polyamide, polyester, and EVOH, the ratio of these can be within any range.

Another aspect of the present invention relates to a resin composition obtained by kneading the above-described composition for a compatibilizer with molded product scrap pieces. Since the composition for a compatibilizer of the present invention can suppress resin whitening, the recyclability can be improved. Herein, the term "recycle" refers to utilization of a resin that has been subjected to a molding process at least once, such as molded product scrap pieces, in at least a part of a molded product.

In the molding of a film using a resin, unnecessary scrap pieces are generated. Such scrap pieces generated during the molding, and molded products recovered after use, are to be recycled, but the physical properties of these may have changed due to factors such as having been in a molten state at least once within an extruder during the molding. Especially in the case of a multilayer film, the use of a plurality of materials raises concerns about changes in the physical properties, and some materials, like polyamide and EVOH, can cause whitening. The present invention can suppress such changes and achieve high recyclability by using the composition for a compatibilizer described above.

The molded product scrap pieces are not particularly limited as long as they are resin compositions derived from articles that have been recovered after being undergone a molding operation one or more times, and can include both scrap pieces generated during the production process of molded products and products recovered for recycling after being circulated as commercial products. Both scrap pieces and recycled products can include those that have been recycled two or more times. Specifically, a mixture containing polyolefin (d1) and one or more components selected from the group consisting of polyamide, polyester, and EVOH (d2) is used as the molded product scrap pieces. The amount ratios of the (d1) and the (d2) vary depending on the type of molded product from which the recovered molded product scrap pieces originated, and for example, the ratios can be 50 to 95% by mass of the polyolefin (d1) and 5 to 50% by mass of the one or more components selected from the group consisting of polyamide, polyester, and EVOH (d2). When the molded product scrap pieces contain two or more of polyamide, polyester, and EVOH, the ratio of these can be within any range.

As the resin composition containing a recycled resin, a resin composition obtained by kneading the aforementioned molded product scrap pieces with a compatibilizer can be used. The mixing ratios of the molded product scrap pieces and the compatibilizer can be, for example, 70 to 99.9% by mass of the molded product scrap pieces and 30 to 0.1% by mass of the compatibilizer, assuming that the total amount of the molded product scrap pieces and the compatibilizer is 100% by mass.

Besides, polyolefin (virgin material) not derived from molded product scrap pieces can be mixed into the resin composition. Examples of the polyolefin not derived from molded product scrap pieces include a polymer of ethylene or α-olefin, a copolymer of ethylene and α-olefin, a copolymer of ethylene and olefin such as norbornene, a polymer of polar group-containing ethylene or alpha-olefin, a copolymer of ethylene and α-olefin, and a copolymer of ethylene and olefin such as norbornene, any of these may be appropriately selected in accordance with the molding application, and one of these or two or more of these may be used. A copolymer of polyethylene, polypropylene, and ethylene-α-olefin is preferred, and LDPE and LLDPE are particularly preferred.

In using polyolefin not derived from molded product scrap pieces, it can be used in an amount more than 0 parts by mass up to 95 parts by mass, assuming that the total amount of the molded product scrap pieces and the compatibilizer is 100 parts by mass, and to maintain good physical properties, the amount is preferably 50 parts by mass or more, and more preferably 70 parts by mass or more, and from the viewpoint of recyclability, the amount is preferably 50 parts by mass or less, and more preferably 30 parts by mass or more.

A method for producing the resin composition of the present invention is not especially limited, and it can be produced by any of known methods. Specifically, the resin composition can be produced by melt-kneading the respective components described above with appropriate equipment to achieve a composition suitable for the intended use of the resin composition.

The respective components can be blended in any form as needed, and depending on the physical properties. For example, each component can be blended as a solid, as a solution dissolved in a solvent, or as a slurry dispersed in a solvent.

Examples of a melt-kneader include those usually used in the production of resin compositions such as a single-screw extruder, a twin-screw extruder, a conical extruder, a straight extruder, a Banbury mixer, a roll mixer, a Henschel mixer, a Brabender Plastograph, a kneader, and a co-kneader.

For the melt-kneading, it is preferable to select a kneading method that allows for good dispersion of the respective components, and usually, a single-screw extruder, a twin-screw extruder, a conical extruder, or a Brabender Plastograph is preferably used. In kneading with these devices, compounds of the respective components can be kneaded simultaneously, or the components can be kneaded in separate batches.

The resin composition of the present invention can be formed into molded articles for various applications by various known methods. Examples of the molding method include injection molding (including gas injection molding), injection compression molding (press injection), extrusion molding, blow molding, calendering, inflation molding, uniaxial stretch film molding, and biaxial stretch film molding. Among these, extrusion molding and inflation molding are more preferred. Accordingly, one aspect of the present invention relates to a recycled film obtained by molding using the resin composition. The recycled film of the present invention can prevent whitening, while maintaining the mechanical properties of the resin, and is excellent in recyclability.

The resin composition of the present invention can be molded on its own into a single-layer film, but is particularly used for molding a multilayer film. An example of the multilayer film includes one including at least a layer (I) containing the aforementioned resin composition, and a layer (II) containing one or more polymers selected from the group consisting of polyamide, polyester, and an ethylene-vinyl alcohol copolymer (EVOH). The polyamide, polyester, and EVOH contained in the layer (II) can be those exemplified above. When the multilayer film has three or more layers, it may have two or more layers corresponding to the layer (I) or the layer (II), and may further include one or more different layers (III). The position of the layer (III) in the multilayer film is not particularly limited, and the layer (III) can constitute a layer in any position and may be disposed between the layer (I) and the layer (II). The type of resin used in the layer (III) is not particularly limited, and an appropriate resin can be selected depending on the role of the layer (III), such as a resin for an adhesive layer between layers, or a resin for a barrier layer. For example, examples of the resin for an adhesive layer include thermoplastic resins such as a polyvinyl acetal resin, an ethylene-vinyl acetate copolymer resin, an ethylene-acrylic copolymer resin, a polyurethane resin, a sulfur-containing polyurethane resin, a polyvinyl alcohol resin, a vinyl chloride resin, and a polyethylene terephthalate resin.

A method for producing a single-layer or multilayer recycled film includes a step of melt-kneading the composition for a compatibilizer (A) in an amount of 0.1 to 30% by mass, polyolefin (B) in an amount of 94.9 to 20% by mass, and the polymer (C) corresponding to none of the modified polyolefin (1-g), the modified polyolefin (2-g), and the (B), in an amount of 5.0 to 79% by mass. A method for forming the melt-kneaded resin into a film-like molded article is as described above. For a multilayer film, a film including a plurality of different layers can be produced in a single-step process by a multilayer extrusion method such as a co-extrusion multilayer T-die method, or can be produced by laminating, by adhesives or heat sealing, single-layer films, each produced by a method such as an inflation method or a single-layer extrusion method.

### EXAMPLES

The present invention will now be further specifically described by way of examples and comparative examples, and it is noted that the present invention is not limited to these examples.

Measurement and evaluation of physical properties in the examples and comparative examples were conducted by the following methods.

Various physical properties of a composition for a compatibilizer, and a resin composition using the same were measured as follows.

### (1) MFR

A melt flow rate (MFR) was measured in accordance with JIS K7210:2014 at 190°C and a load of 2.16 kg.

### (2) Density

A density was measured by the D method in accordance with JIS K7112:1999.

### (3) Acid Anhydride Group Content (C=O value)

A press sheet was prepared under the following conditions, and its infrared absorption spectrum was measured. Based on the result of the infrared absorption spectrum, a total C=O value was calculated.

### (Preparation of Press Sheet)

Heating conditions: temperature: 180°C, time: 1 min
(Infrared Absorption Spectrum Measurement)
Measurement Apparatus: FT-IR6100 (manufactured by JASCO Corporation)
Measurement Method: transmission method

Total C=O value: calculated in accordance with the following expression

| | |
|---|---|
| Total C=O value = (I₁ + I₂)/I₀ | |
| I₁: | absorption peak height at 1790 cm⁻¹ |
| I₂: | absorption peak height at 1710 cm⁻¹ |
| I₀: | absorption peak height at 4250 cm⁻¹ |

Properties of resin compositions in the examples and comparative examples were measured by the following methods.

### (1) Tensile Strength at Break, Tensile Strain at Break, and Tensile Modulus

- Tensile Strength at Break, Tensile Strain at Break: evaluated based on JIS K7127 with the following apparatus:
   Apparatus: Tensilon universal testing machine (manufactured by Orientec Co., Ltd.)
   Test piece: JIS K7127 type 5
   Grip-to-grip distance: 65 mm
   Tensile speed: 500 mm/min
   Measurement environment: temperature: 23°C, humidity: 50%
- Tensile Modulus: The tensile modulus was evaluated based on JIS K7127 with the following apparatus.
   Apparatus: Tensilon universal testing machine (manufactured by Orientec Co., Ltd.)
   Test piece width: 10 mm
   Grip-to-grip distance: 100 mm
   Tensile speed: 25 mm/min
   Measurement environment: temperature: 23°C, humidity: 50%

### (2) Elmendorf Tear Strength

Elmendorf tear strength was evaluated in accordance with JIS K7128-2, using the following apparatus. The measurement directions were the transverse direction (TD) and machine direction (MD) values relative to the film flow direction.
Apparatus: digital Elmendorf tear tester, Model SA (manufactured by Toyo Seiki Seisaku-sho, Ltd.)
Measurement environment: temperature: 23°C, humidity: 50%

### (3) Film Impact Value

With FILM IMPACT TESTER manufactured by Toyo Seiki Seisaku-sho, Ltd. (hereinafter referred to simply as the "tester") used, work required for penetration break per unit film thickness was measured. Specifically, after storing a test film in an atmosphere of 23°C and 50% for conditioning, the test film was fixed in the tester with a 50 mm diameter holder, a 1-inch (25.4 mm) hemispherical metal was then caused to strike the inner surface of the test film at a penetration point, and the work required for penetration break was measured. Here, the load was removed, and the maximum scale reading (work) was set to 1.5 J. Then, a film impact value was defined as a value obtained by dividing the work by the film thickness.

### (4) Dart Drop Impact Strength

The measurement was performed based on JIS K7124 by the A method.
Measurement environment: temperature: 23°C, humidity: 50%

### (5) Haze (%)

Haze of a press sheet with a thickness of 100 µm was measured in accordance with JIS-K7136-2000, and transparency was evaluated using the resultant measured value (external haze). Simultaneously, to eliminate the influence of the sheet surface on the measurement value, Haze in a state where the press sheet was immersed in a quarts cell filled with liquid paraffin, namely, internal haze (%), was measured.

### Example 1

### [Production of PE-1]

### 1. Preparation of Catalyst

A catalyst was prepared by a method described in JP 1995-508545 A. Specifically, a catalyst solution was prepared by adding an equimolar amount of tripentafluorophenylboron to 2.0 mmol of complex dimethylsilylenebis(4,5,6,7-tetrahydroindenyl)hafnium dimethyl, and then diluting the resultant with toluene to 10 liters.

### 2. Polymerization

In a stirring autoclave-type continuous reactor with an internal volume of 1.5 liters, the pressure inside the reactor was maintained at 130 MPa, and a mixture of ethylene and 1-hexene was continuously supplied thereto as raw material gas at a rate of 40 kg/hour to achieve the composition of 1-hexene of 67% by weight. Besides, the aforementioned catalyst solution was continuously supplied thereto, and the supply rate was adjusted to maintain a polymerization temperature of 166°C. The amount of polymer production per hour was about 4.4 kg. After completing the reaction, an ethylene-1-hexene copolymer (PE-1), which had a 1-hexene content of 16% by weight, an MFR of 47.0 g/10 min, a density of 0.896 g/cm³, and an Mw/Mn of 2.7 was obtained.

### [Production of PE-2]

### 1. Preparation of Catalyst

A catalyst was prepared in the same manner as in the production of PE-1.

### 2. Polymerization

In a stirring autoclave-type continuous reactor with an internal volume of 1.5 liters, the pressure inside the reactor was maintained at 130 MPa, and a mixture of ethylene and 1-hexene was continuously supplied thereto as raw material gas at a rate of 40 kg/hour to achieve the composition of 1-hexene of 64% by weight. Besides, the aforementioned catalyst solution was continuously supplied thereto, and the supply rate was adjusted to maintain a polymerization temperature of 140°C. The amount of polymer production per hour was about 2.0 kg. After completing the reaction, an ethylene-1-hexene copolymer (PE-2), which had a 1-hexene content of 15% by weight, an MFR of 2.2 g/10 min, a density of 0.898 g/cm³, and an Mw/Mn of 2.3 was obtained.

### [Production of Composition for Compatibilizer]

To 80 parts by weight of the PE-1 as the copolymer (1) and 20 parts by weight of the PE-2 as the copolymer (2), 0.8 parts by weight of maleic anhydride, and 0.016 parts by weight of 2,5-dimethyl-2,5-di-(t-butylperoxy)hexane were added, the resultant was thoroughly mixed in a Henschel mixer, and the resultant mixture was melt kneaded with a 58mm twin-screw extruder to obtain a pelletized composition for a compatibilizer of Examples 1 having an MFR of 12.0 g/10 min, a density of 0.888 g/cm³, and a C=O value of 2.1.

### [Production of Resin Composition]

To 50 parts by weight of linear low-density polyethylene (manufactured by Japan Polyethylene Corporation, product name: Novatec LL, grade: UF843), 30 parts by weight of polyamide 6 (manufactured by Toray Industries, Inc., product name: Amilan, grade: CM1017), and 20 parts by weight of polar group-containing polyethylene (manufactured by Mitsubishi Chemical Corporation, product name: Modic, grade: M522), 30 parts by weight of the composition for a compatibilizer was added, and the resultant was kneaded with a twin-screw extruder to obtain a resin composition of Example 1.

### [Molding of Resin Composition]

The resin composition of Example 1 was extruded with a film molding apparatus to obtain a film with a thickness of 70 µm.

### Example 2

### [Production of Composition for Compatibilizer]

A pelletized composition for a compatibilizer having an MFR of 7.8 g/10 min, a density of 0.897 g/cm³, and a C=O value of 2.0, a resin composition, and a film of Example 2 were obtained in the same manner as in Example 1 except that 70 parts by weight of the PE-1 as the copolymer (1) and 30 parts by weight of the PE-2 as the copolymer (2) were used.

### Example 3

A composition for a compatibilizer, a resin composition, and a film of Example 3 were obtained in the same manner as in Example 1 except that the amount of the composition for a compatibilizer was changed to 5 parts by weight (corresponding to 4.8% by mass assuming that the total amount of the compatibilizer (A), the polyolefin (B), the resin (C) different from all of the PE-1, the PE-2, and the polyolefin was 100% by mass).

### Example 4

### [Production of Composition for Compatibilizer]

A pelletized composition for a compatibilizer having an MFR of 22.2 g/10 min, a density of 0.897 g/cm³, and a C=O value of 1.8, a resin composition, and a film of Example 4 were obtained in the same manner as in Example 1 except that the use amount of the PE-1 as the copolymer (1) was changed to 95 parts by weight, and that the use amount of the PE-2 as the copolymer (2) was changed to 5 parts by weight.

### Example 5

### [Production of Composition for Compatibilizer]

A pelletized composition for a compatibilizer having an MFR of 19.0 g/10 min, a density of 0.897 g/cm³, and a C=O value of 1.8, a resin composition, and a film of Example 5 were obtained in the same manner as in Example 1 except that the use amount of the PE-1 as the copolymer (1) was changed to 90 parts by weight, and that the use amount of the PE-2 as the copolymer (2) was changed to 10 parts by weight.

### Example 6

### [Production of Composition for Compatibilizer]

A pelletized composition for a compatibilizer having an MFR of 5.6 g/10 min, a density of 0.896 g/cm³, and a C=O value of 2.4, a resin composition, and a film of Example 6 were obtained in the same manner as in Example 1 except that the use amount of the PE-1 as the copolymer (1) was changed to 55 parts by weight, and that the use amount of the PE-2 as the copolymer (2) was changed to 45 parts by weight.

### Example 7

### [Production of Composition for Compatibilizer]

A pelletized composition for a compatibilizer having an MFR of 3.0 g/10 min, a density of 0.897 g/cm³, and a C=O value of 2.7, a resin composition, and a film of Example 7 were obtained in the same manner as in Example 1 except that the use amount of the PE-1 as the copolymer (1) was changed to 30 parts by weight, and that the use amount of the PE-2 as the copolymer (2) was changed to 70 parts by weight.

### Example 8

### [Production of Composition for Compatibilizer]

A pelletized composition for a compatibilizer having an MFR of 9.3 g/10 min, a density of 0.889 g/cm³, and a C=O value of 2.4, a resin composition, and a film of Example 8 were obtained in the same manner as in Example 2 except that the copolymer (1) was changed to an ethylene-propylene-hexene copolymer (manufactured by Japan Polyethylene Corporation, product name: Kernel, grade: KJ640T, MFR: 30.0 g/10 min, density: 0.880 g/cm³).

### Example 9

### [Production of Composition for Compatibilizer]

A pelletized composition for a compatibilizer having an MFR of 18.6 g/10 min, a density of 0.921 g/cm³, and a C=O value of 1.7, a resin composition, and a film of Example 9 were obtained in the same manner as in Example 2 except that the copolymer (1) was changed to linear low-density polyethylene (manufactured by Japan Polyethylene Corporation, product name: Novatec LL, grade: UJ890, MFR: 105.0 g/10 min, density: 0.931 g/cm³).

### Example 10

### [Production of Composition for Compatibilizer]

A pelletized composition for a compatibilizer having an MFR of 11.4 g/10 min, a density of 0.941 g/cm³, and a C=O value of 2.0, a resin composition, and a film of Example 10 were obtained in the same manner as in Example 2 except that the copolymer (1) was changed to high-density polyethylene (manufactured by Japan Polyethylene Corporation, product name: Novatec HD, grade: HJ590N, MFR: 40.0 g/10 min, density: 0.960 g/cm³).

### Example 11

### [Production of Composition for Compatibilizer]

A pelletized composition for a compatibilizer having an MFR of 6.75 g/10 min, a density of 0.915 g/cm³, and a C=O value of 2.1, a resin composition, and a film of Example 11 were obtained in the same manner as in Example 2 except that the copolymer (1) was changed to linear low-density polyethylene (manufactured by Japan Polyethylene Corporation, product name: Novatec LL, grade: US370GN, MFR: 16.0 g/10 min, density: 0.921 g/cm³).

### Example 12

### [Production of Composition for Compatibilizer]

A pelletized composition for a compatibilizer having an MFR of 9.90 g/10 min, a density of 0.894 g/cm³, and a C=O value of 2.1, a resin composition, and a film of Example 12 were obtained in the same manner as in Example 2 except that the copolymer (2) was changed to an ethylene-propylene-hexene copolymer (manufactured by Japan Polyethylene Corporation, product name: Kernel, grade: KM340T, MFR: 3.5 g/10 min, density: 0.880 g/cm³).

### Example 13

### [Production of Composition for Compatibilizer]

A pelletized composition for a compatibilizer having an MFR of 10.2 g/10 min, a density of 0.904 g/cm³, and a C=O value of 2.1, a resin composition, and a film of Example 13 were obtained in the same manner as in Example 2 except that the copolymer (2) was changed to linear low-density polyethylene (manufactured by Japan Polyethylene Corporation, product name: Novatec LL, grade: F30HG, MFR: 2.0 g/10 min, density: 0.922 g/cm³).

### Example 14

### [Production of Composition for Compatibilizer]

A pelletized composition for a compatibilizer having an MFR of 8.5 g/10 min, a density of 0.910 g/cm³, and a C=O value of 3.2, a resin composition, and a film of Example 14 were obtained in the same manner as in Example 2 except that the copolymer (2) was changed to linear low-density polyethylene (manufactured by Japan Polyethylene Corporation, product name: Novatec LL, grade: SF8402G, MFR: 2.9 g/10 min, density: 0.930 g/cm³), and that the use amount of maleic anhydride was changed to 1.6 parts by weight.

### Example 15

### [Production of Composition for Compatibilizer]

A pelletized composition for a compatibilizer having an MFR of 15.8 g/10 min, a density of 0.895 g/cm³, and a C=O value of 2.2, a resin composition, and a film of Example 15 were obtained in the same manner as in Example 2 except that the copolymer (2) was changed to an ethylene-propylene copolymer (manufactured by Japan Polyethylene Corporation, product name: Kernel, grade: KS550, MFR: 8.0 g/10 min, density: 0.886 g/cm³).

### Example 16

### [Production of Resin Composition]

A pelletized composition for a compatibilizer, a resin composition, and a film of Example 16 were obtained in the same manner as in Example 1 except that the use amount of the linear low-density polyethylene (manufactured by Japan Polyethylene Corporation, product name: Novatec LL, grade: UF843) was changed to 70 parts by weight, and that the use amount of the polyamide 6 (manufactured by Toray Industries, Inc., product name: Amilan, grade: CM1017) was changed to 30 parts by weight.

### Example 17

A pelletized composition for a compatibilizer, a resin composition, and a film of Example 17 were obtained in the same manner as in Example 1 except that the use amount of the composition for a compatibilizer was changed to 7 parts by weight (corresponding to 6.5% by mass assuming that the total amount of the compatibilizer (A), the polyolefin (B), the resin (C) different from all of the PE-1, the PE-2, and the polyolefin was 100% by mass).

### Example 18

A pelletized composition for a compatibilizer, a resin composition, and a film of Example 18 were obtained in the same manner as in Example 1 except that the use amount of the composition for a compatibilizer was changed to 10 parts by weight (corresponding to 9.1% by mass assuming that the total amount of the compatibilizer (A), the polyolefin (B), the resin (C) different from all of the PE-1, the PE-2, and the polyolefin was 100% by mass).

### Example 19

A pelletized composition for a compatibilizer, a resin composition, and a film of Example 19 were obtained in the same manner as in Example 1 except that the use amount of the composition for a compatibilizer was changed to 15 parts by weight (corresponding to 13.0% by mass assuming that the total amount of the compatibilizer (A), the polyolefin (B), the resin (C) different from all of the PE-1, the PE-2, and the polyolefin was 100% by mass).

### Comparative Example 1

### [Production of Composition for a Compatibilizer]

To 100 parts by weight of the PE-1 as the copolymer (1), 0.8 parts by weight of maleic anhydride and 0.016 parts by weight of 2,5-dimethyl-2,5-di-(t-butylperoxy)hexane were added, the resultant was thoroughly mixed in a Henschel mixer, and then, the resultant mixture was melt-kneaded using a 58mm twin-screw extruder. Since the copolymer (2) was not contained, the resultant had a high MFR and a low viscosity, and hence could not be pelletized, and a pelletized composition for a compatibilizer could not be obtained.

### Comparative Example 2

50 parts by weight of linear low-density polyethylene (manufactured by Japan Polyethylene Corporation, product name: Novatec LL, grade: UF843), 30 parts by weight of polyamide 6 (manufactured by Toray Industries, Inc., product name: Amilan, grade: CM1017), and 20 parts by weight of polar group-containing polyethylene (manufactured by Mitsubishi Chemical Corporation, product name: Modic, grade: M522) were kneaded with a twin-screw extruder to obtain a resin composition of Comparative Example 2.

### [Molding of Resin Composition]

The resin composition was extruded with a film molding apparatus, but holes occurred in the film, and a desired film could not be obtained. Since Comparative Example 2 did not contain a composition for a compatibilizer, polyethylene and polyamide were not mixed homogenously, which probably led to instability in the film composition and thickness, resulting in the occurrence of holes.

The compositions of the compositions for a compatibilizer used in Examples and Comparative Examples, as well as the properties of the films obtained from the resin compositions of Examples 1 to 19 and Comparative Examples 1 and 2 are together shown in Table 1. A pelletized composition for a compatibilizer could be obtained by employing the composition of the present invention, resulting in obtaining a highly recyclable resin composition that could be mixed with another resin to form a film. Besides, it was found that the addition of the composition for a compatibilizer of the present invention results in excellent internal haze, allowing high transparency to be maintained.

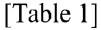

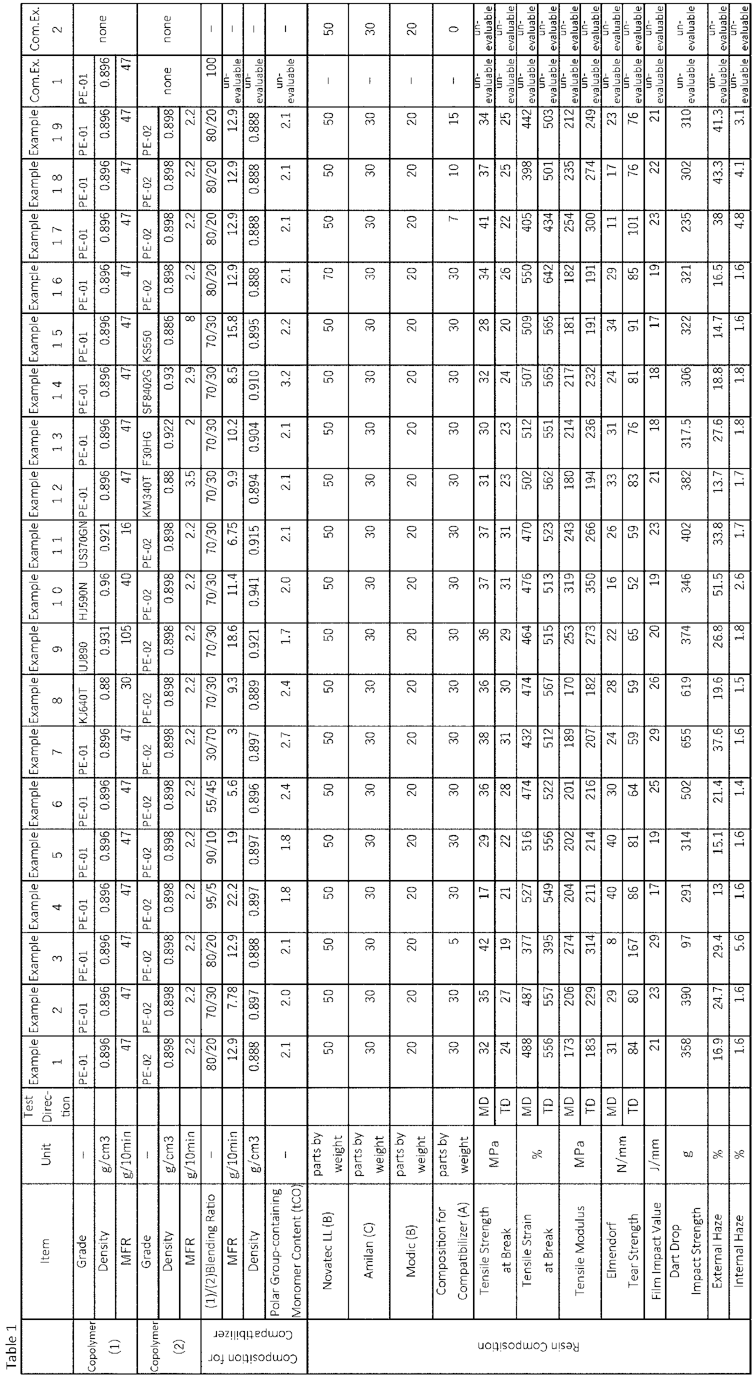

### INDUSTRIAL APPLICABILITY

The present invention provides a composition for a compatibilizer capable of yielding a resin composition that can prevent whitening, while maintaining the mechanical properties of the resin, and is excellent in recyclability. The resin composition using the composition for a compatibilizer of the present invention is excellent in recyclability, and hence can be used as various molded products to be recycled, particularly a resin for a multilayer film.

## Claims

1. A composition for a compatibilizer comprising:
20 to 95% by mass of a modified polyolefin (1-g) obtained by graft-modifying, with a polar group-containing monomer, an ethylene-α-olefin copolymer (1) having a density of 0.86 to 0.98 g/cm³, and a melt flow rate (MFR) measured at a temperature of 190°C and a load of 2.16 kg of 10 to 110 g/10 min; and
80 to 5% by mass of a modified polyolefin (2-g) obtained by graft-modifying, with a polar group-containing monomer, an ethylene-α-olefin copolymer (2) having a density of 0.86 to 0.98 g/cm³, and an MFR measured at a temperature of 190°C and a load of 2.16 kg of 0.1 g/10 min or more and less than 10 g/10 min.

2. The composition for a compatibilizer according to claim 1, having an MFR of 2 to 40 g/10 min.

3. The composition for a compatibilizer according to claim 1, wherein the polar group-containing monomer is a carboxylic acid group- or acid anhydride group-containing monomer, an ester group-containing monomer, an amino group-containing monomer, a silane group-containing monomer, or a glycidyl group-containing monomer.

4. The composition for a compatibilizer according to claim 1, wherein the polar group-containing monomer is a carboxylic acid group- or acid anhydride group-containing monomer.

5. A resin composition obtained by kneading:
the composition for a compatibilizer according to claim 1 (A) in an amount of 0.1 to 30% by mass;
polyolefin (B) in an amount of 94.9 to 20% by mass; and
a polymer (C) corresponding to none of the modified polyolefin (1-g), the modified polyolefin (2-g), and the (B) in an amount of 5.0 to 79% by mass.

6. The resin composition according to claim 5, wherein the (C) is one or more selected from the group consisting of polyamide, polyester, and an ethylene-vinyl alcohol copolymer (EVOH).

7. A resin composition obtained by kneading:
the composition for a compatibilizer according to claim 1 (A) in an amount of 30 to 0.1% by mass;
molded product scrap pieces (D) comprising 50 to 95% by mass of polyolefin, and 50 to 5% by mass of one or more selected from the group consisting of polyamide, polyester, and EVOH, in an amount of 70 to 99.9% by mass; and
optionally polyolefin (B') not derived from molded product scrap pieces in an amount of 0 parts by mass to 95 parts by mass based on 100 parts by mass of a total amount of the composition for a compatibilizer and the molded product scrap pieces.

8. A recycled film obtained by molding using the resin composition according to claim 7.

9. A multilayer film comprising at least:
a layer (I) comprising the resin composition according to claim 7; and
a layer (II) comprising one or more polymers selected from the group consisting of polyamide, polyester, and an ethylene-vinyl alcohol copolymer (EVOH).

10. A method for producing a recycled film, comprising a step of melt-kneading:
the composition for a compatibilizer according to claim 1 (A) in an amount of 0.1 to 30% by mass;
polyolefin (B) in an amount of 94.9 to 20% by mass; and
a polymer (C) corresponding to none of the modified polyolefin (1-g), the modified polyolefin (2-g), and the (B), in an amount of 5.0 to 79% by mass.
